# FASCICULE DE BREVET EUROPEEN

(11) **EP 4 634 953 B1**
(45) Date de publication et mention de la délivrance du brevet: **25.11.2026**
(21) Numéro de dépôt: 23833180.5
(22) Date de dépôt: 06.12.2023
(51) Int. Cl.: H01H 9/38, B60L 3/04, H01H 9/54, H01H 33/59, H01H 50/54, H01H 39/00, H01H 85/02

(54) **INSTALLATION ÉLECTRIQUE AVEC MOYENS DE COUPURE D'ARC ÉLECTRIQUE SÉRIE EN PARTICULIER DANS UN CONTACTEUR**
ELEKTROINSTALLATION MIT SERIELLEN LICHTBOGENUNTERBRECHERN, INSBESONDERE IN EINEM SCHÜTZ
ELECTRICAL INSTALLATION WITH SERIAL ARC BREAKING MEANS, IN PARTICULAR IN A CONTACTOR

(30) Priorité: 14.12.2022 FR 2213373
(43) Date de publication de la demande: 22.10.2025
(73) Titulaire: Safran Electrical & Power, 31702 Blagnac (FR)
(72) Inventeur: GUILLARD, Eric, 77550 Moissy-Cramayel (FR)
(74) Mandataire: Gevers & Orès
(86) Numéro de dépôt international: PCT/FR2023/051941
(87) Numéro de publication internationale: WO 2024/126926

(56) Documents cités:
- EP-A1- 2 407 995
- EP-A1- 3 820 009
- EP-A1- 3 998 687
- WO-A1-2018/220307

## Description

### Domaine technique de l'invention

La présente invention concerne une installation électrique avec des moyens de coupure d'arc électrique série en particulier dans un contacteur, ainsi qu'un aéronef comportant une telle installation électrique.

### Arrière-plan technologique

Les avions à décollage et atterrissage vertical (de l'anglais « Vertical Take Off and Landing » également désignés par l'acronyme VTOL) et les avions conventionnels (de l'anglais « Conventional Take Off and Landing », également désignés par l'acronyme CTOL) à propulsion électriques ou hybride constituent un marché futur avec des perspectives et une demande importantes dans le transport intra urbain et inter urbain pour des marchandises ou des personnes.

La propulsion de ces différentes plateformes est réalisée par un ou plusieurs moteurs électriques, le nombre variant suivant les architectures des aéronefs. Ces systèmes propulsifs électriques utilisent des niveaux de tension toujours plus élevés.

Les modes de pannes de ces systèmes montrent que l'apparition d'un arc électrique série peut avoir des conséquences sérieuses sur les structures avion si ce dernier n'est pas clarifié (c'est-à-dire arrêté).

Dans un appareil utilisant une puissance électrique propulsive, une ou plusieurs des fonctions suivantes peuvent être utilisées pour assurer l'alimentation de puissance de l'aéronef :
- un système de stockage de l'énergie, par exemple sous forme de batteries,
- un système de gestion de batterie (de l'anglais « Battery Management System », également désigné par l'acronyme BMS) destiné à la gestion de la charge et décharge des cellules des batteries,
- un équipement de distribution et protection de la chaine d'alimentation, et
- un ensemble convertisseur propulsion destiné à transformer l'énergie électrique en énergie mécanique.

La détection des arcs électrique série dans une chaine d'alimentation électrique embarquée, en particulier au niveau d'un contacteur, nécessite souvent l'utilisation de composants dédiés à cette fonction, qui peuvent être complexes.

Il peut ainsi être souhaité de prévoir une installation électrique avec des moyens de clarification d'arc électrique série, qui permette de s'affranchir d'au moins une partie des problèmes et contraintes précités. Par ailleurs, l'état de la technique comporte la demande de brevet européen EP 2 407 995 A1.

### Résumé de l'invention

Il est donc proposé une installation électrique d'un aéronef selon la revendication 1.

L'invention permet ainsi de détecter l'apparition d'un arc électrique série entre le contact mobile et le point de la première ligne d'alimentation, en particulier sur le contacteur de puissance. En effet, l'arc électrique série présente une chute de tension entraînant l'apparition d'un courant circulant dans la branche parallèle. En réponse à ce courant, le dispositif d'ouverture ouvre l'une des lignes d'alimentation, ce qui clarifie l'arc électrique série, c'est-à-dire l'arrête. En outre, lorsque le contacteur de puissance est ouvert, la branche est également ouverte, empêchant ainsi une circulation de courant qui pourrait entraîner de manière intempestive le déclenchement du dispositif d'ouverture.

L'invention peut en outre comporter l'une ou plusieurs des caractéristiques optionnelles des revendications 2 à 11, selon toute combinaison techniquement possible.

Il est également proposé un aéronef comportant une installation électrique selon l'invention.

### Brève description des figures

L'invention sera mieux comprise à l'aide de la description qui va suivre, donnée uniquement à titre d'exemple et faite en se référant aux dessins annexés dans lesquels :
- la figure 1 est un schéma électrique d'un exemple d'une installation électrique selon l'invention,
- la figure 2 est un schéma-bloc d'un exemple de procédé de fonctionnement de l'installation de la figure 1,
- la figure 3 reprend le schéma électrique de la figure 1 dans le cas d'apparition d'un arc électrique série suite à la fonte d'un fusible de l'installation électrique,
- la figure 4 est reprend le schéma électrique de la figure 1 dans le cas d'apparition d'un arc électrique série dans un contacteur de puissance de l'installation électrique,
- la figure 5 illustre des courbes de non-endommagement d'une ligne d'alimentation et de déclenchement du fusible,
- la figure 6 est reprend le schéma électrique de la figure 1 dans le cas d'apparition d'arcs électriques série dans un contacteur de puissance de l'installation électrique, lors de son ouverture, et
- la figure 7 est un schéma électrique d'un autre exemple d'une installation électrique selon l'invention, et
- la figure 8 est un schéma électrique d'un autre exemple d'une installation électrique selon l'invention.

### Description détaillée de l'invention

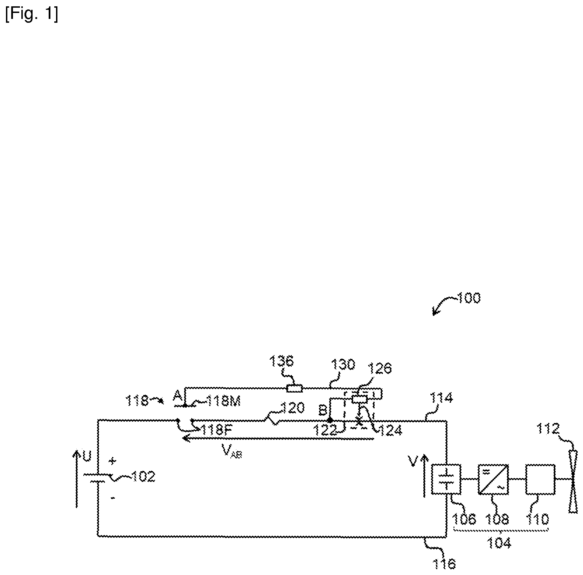

En référence à la figure 1, un exemple d'une installation électrique 100 selon l'invention va à présent être décrite.

L'installation électrique 100 comporte tout d'abord une source électrique 102, par exemple une source électrique continue telle qu'une batterie. La source électrique 102 est ainsi conçue pour fournir une tension U, qui peut être continue.

L'installation électrique 100 comporte en outre une charge électrique 104 conçue pour recevoir une tension continue V. Par exemple, la charge électrique 104 comporte un étage 106 de lissage de la tension continue V, un convertisseur de tension continu/alternatif 108 pour convertir la tension continue V lissée en une tension alternative et une machine électrique 110 d'entraînement d'une soufflante 112 de l'aéronef (par exemple une hélice) à partir de la tension alternative.

L'installation électrique 100 comporte en outre des première et deuxième lignes d'alimentation 114, 116 connectant chacune la charge électrique 104 à la source électrique 102 pour alimenter électriquement la charge électrique 104 à partir de la source électrique 102.

L'installation électrique 100 comporte en outre un contacteur de puissance 118 situé sur l'une des lignes d'alimentation 114, 116. Le contacteur de puissance 118 est à double coupure et comporte deux contacts fixes 118F et une palette mobile 118M servant de contact mobile conçu pour venir au contact des deux contact fixes 118F lorsque le contacteur de puissance 118 est fermé, et s'en éloigner lorsque le contacteur de puissance 118 est ouvert.

L'installation électrique 100 comporte en outre de préférence un dispositif de soufflage d'arc (non représenté) conçu pour déplacer et faire disparaître le ou les arcs électriques apparaissant entre le contact mobile 118M et chacun des contacts fixes 118F lors de l'ouverture du contacteur de puissance 118. Le déplacement du ou des arcs électriques est par exemple obtenu en appliquant un champ magnétique et la disparition du ou des arcs électriques par exemple en divisant l'arc électrique en plusieurs arcs électriques plus petits.

L'installation électrique 100 comporte en outre un fusible 120 situé sur l'une des lignes d'alimentation 114, 116.

L'installation électrique 100 comporte en outre un dispositif d'ouverture de l'une des lignes d'alimentation 114, 116, afin de clarifier un arc électrique série apparaissant entre le contact mobile 118M et un point B de la première ligne d'alimentation 114, situé par exemple du côté de la charge électrique 104 par rapport au contacteur de puissance 118.

De préférence, le dispositif d'ouverture est de préférence conçu pour se déclencher une seule fois sans possibilité de se réarmer. Cela signifie qu'il est conçu pour couper l'une des lignes d'alimentation sans pouvoir rétablir cette dernière, c'est-à-dire sans pouvoir rétablir de connexion électrique le long de la ligne d'alimentation coupée. Le dispositif d'ouverture comporte par exemple un interrupteur pyrotechnique 122 (de l'anglais « pyroswitch ») situé sur l'une des lignes d'alimentation 114, 116. L'interrupteur pyrotechnique 122 comporte une guillotine 124, une résistance d'initialisation 126 et un élément pyrotechnique (non représenté) conçu pour être déclenché sous l'effet de la chaleur dégagée par la résistance d'initialisation 126.

Le déclenchement de l'élément pyrotechnique a pour but de propulser la guillotine 124 de sorte que cette dernière coupe mécaniquement la ligne d'alimentation (la première ligne d'alimentation 114 dans l'exemple illustré). La résistance d'initialisation 126 est ainsi conçue pour être traversée par un courant pour s'échauffer et fournir ainsi la chaleur nécessaire au déclenchement de l'élément pyrotechnique.

Le dispositif d'ouverture comporte en outre un dispositif 128 de détection d'un arc électrique série et d'activation de l'interrupteur pyrotechnique 122.

Le dispositif de détection 128 comporte ainsi une branche 130 connectée entre le contact mobile 118M (connexion à un point A du contact mobile 118) et le point B de la première ligne d'alimentation 114. De préférence, le fusible 120 est situé entre le contacteur de puissance 118 et le point B. Ainsi, il est possible de détecter un arc électrique série apparaissant à l'ouverture ou à la fermeture du contacteur de puissance 118 ou bien un arc électrique série provoqué par un endommagement de la première ligne d'alimentation entre le contact mobile 118 et le point B, par exemple apparaissant à la suite d'une fonte du fusible 120. L'interrupteur pyrotechnique 122 peut être conçu pour couper la première ligne d'alimentation 114 en dehors du segment de la première ligne d'alimentation 114 s'étendant entre le contact mobile 118M et le point B, comme illustré sur la figure 1, mais cela n'est pas obligatoire.

Dans le cas où la charge électrique 104 comporte la machine électrique 110 couplée à la soufflante 112, l'interrupteur pyrotechnique 122 est de préférence conçu pour couper la première ligne d'alimentation 114 au plus près de la machine électrique 110. En effet, cette dernière peut devenir génératrice lorsqu'elle est déconnectée de la source électrique 102 et peut ainsi réalimenter d'autres charges connectées entre les lignes d'alimentation 114, 116.

Le dispositif de détection 128 comporte en outre, en série sur la branche 130 : une résistance de temporisation 136 et la résistance d'initialisation 126 du fusible pyrotechnique 122, la résistance d'initialisation 126 étant la dernière, c'est-à-dire la plus proche du point B.

La résistance de temporisation 136 vient limiter le courant passant dans la résistance d'initialisation 126 et ralentit donc l'échauffement de cette dernière. Cela permet d'éviter un déclenchement du fusible pyrotechnique pour un arc électrique série transitoire qui disparait spontanément ou bien grâce au dispositif de soufflage, très rapidement après son apparition. Dans certains cas, en particulier lorsque le retard inhérent à la résistance d'initialisation 126 est jugé suffisant, la résistance de temporisation 136 peut être omise.

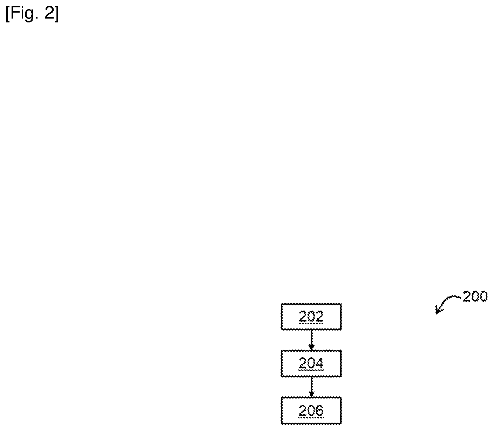

En référence à la figure 2, un exemple de procédé 200 de fonctionnement de l'installation électrique 100 va à présent être décrit.

Le contacteur de puissance 118 est initialement ouvert. Ainsi, la charge électrique 104 est déconnectée de la source électrique 102, de sorte que sa tension V est nulle et qu'aucun courant ne circule dans les lignes d'alimentation 114, 116. En outre, la connexion de la branche 130 au contact mobile 118M empêche un déclenchement intempestif de l'interrupteur pyrotechnique 122. En effet, si la branche 130 étant connectée directement à la première ligne d'alimentation 114 de l'autre côté du point B par rapport au contacteur de puissance 118, la tension U présente entre les points A et B entraînerait la circulation d'un courant dans la branche 130 et donc en particulier dans la résistance d'initialisation 126 qui pourrait conduire au déclenchement de l'interrupteur pyrotechnique 122.

Au cours d'une étape 202, le contacteur de puissance 118 est fermé. La source électrique 102 alimente électriquement la charge électrique 104 de sorte qu'un courant circule dans les lignes d'alimentation 114, 116.

En l'absence d'arc électrique série, la chute de tension sur la première ligne d'alimentation 114 est très faible. Plus précisément, la chute de tension du contacteur de puissance 118 est par exemple inférieure à 150 mV et la chute de tension du fusible 120 est par exemple inférieure à 150 mV. Ainsi, il existe entre le contact mobile 118M et le point B une tension V_{AB} négligeable, n'entraînant pas de circulation de courant dans la branche 130 suffisante pour déclencher le fusible pyrotechnique 122.

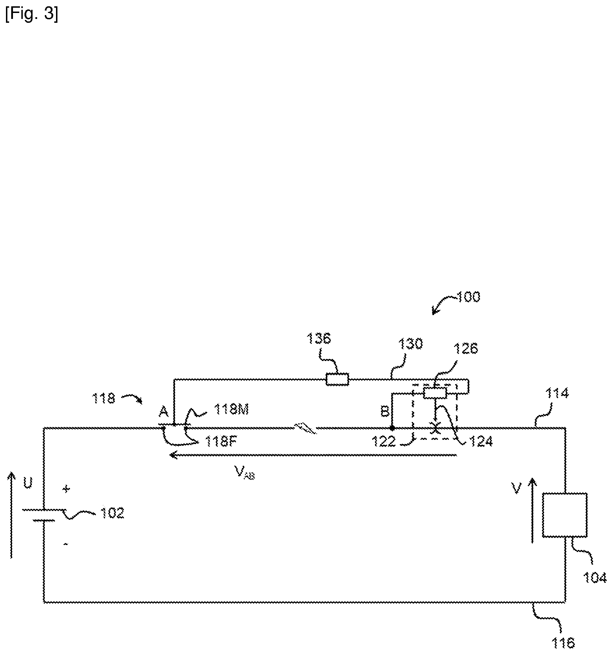

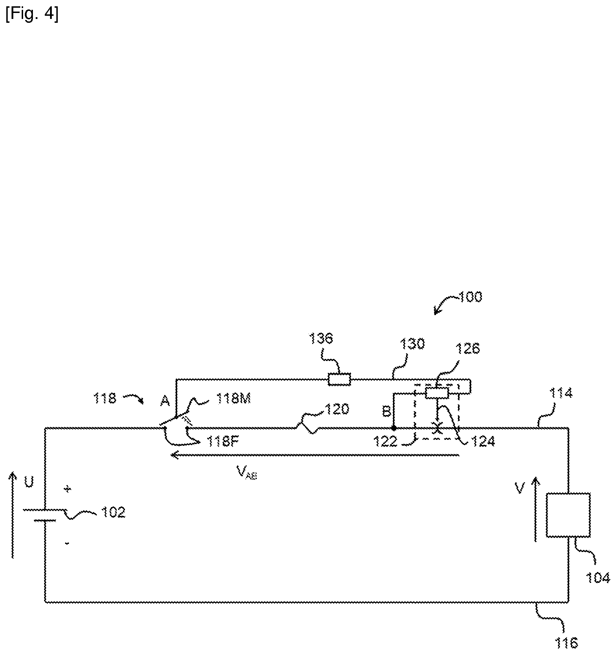

Au cours d'une étape 204, un arc électrique série apparaît sur la première ligne d'alimentation 114, entre le contacteur de puissance 118 et le point B. L'arc électrique série fait par exemple suite à une fonte du fusible 120 et apparaît à la place du fusible 120, comme illustré sur la figure 3. Alternativement, l'arc électrique série peut apparaître dans le contacteur de puissance 118 s'il est mal fermé. Par exemple, un espace peut subsister entre le contact fixe 118F du côté du point B et le contact mobile 118M, l'arc électrique série s'étendant alors dans cet espace, comme illustré sur la figure 4.

Comme cela est expliqué dans la thèse de André Thibault intitulée « Étude des mécanismes d'entretien et de propagation d'un arc électrique de court-circuit entre câbles endommagés dans les réseaux électriques d'aéronefs », disponible sous l'identifiant tel-01804832 sur la plate-forme HAL, l'arc électrique série présente à son apparition une chute de tension de quelques volts, par exemple d'au moins 15 V à 20 V.

La chute de tension de l'arc électrique série vient s'ajouter à celle de la première ligne d'alimentation 114 entre le contacteur de puissance 118 et le point B (les autres éléments présentant une chute de tension négligeable). En outre, au fur et à mesure que la longueur de l'arc électrique série augmente (par exemple, lorsque la matière en fusion du fusible 120 tombe ou bien se désagrège), la chute de tension de l'arc électrique série peut augmenter, et donc également la chute de tension V_{AB} entre le contacteur de puissance 118 et le point B. Ainsi, l'apparition de l'arc électrique entraîne la circulation d'un courant dans la branche 130 et en particulier dans la résistance d'initialisation 126 qui s'échauffe.

Au cours d'une étape 206, la chaleur dégagée par la résistance d'initialisation 126 devient suffisamment élevée pour déclencher l'interrupteur pyrotechnique 122 qui coupe la première ligne d'alimentation 114 et stoppe ainsi l'arc électrique série.

La suppression par l'interrupteur pyrotechnique 122 de l'arc électrique provenant d'un déclenchement du fusible 120, permet d'éviter de réinjecter de l'énergie dans le réseau (effet désigné en anglais « windmilling ») si l'interrupteur pyrotechnique 122 est localisé près de la charge électrique 104, en particulier de la machine électrique 110 de propulsion.

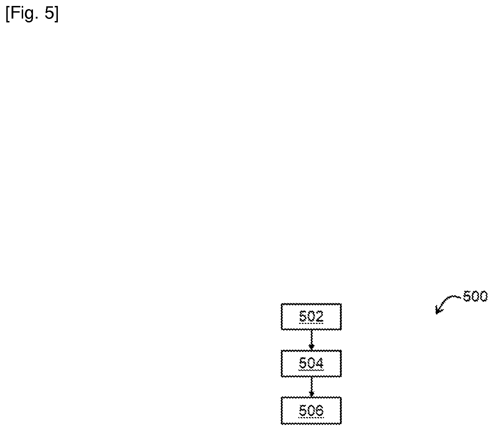

En référence à la figure 5, un autre exemple de procédé 500 de fonctionnement de l'installation électrique 100 va à présent être décrit.

Le contacteur de puissance 118 est initialement fermé. Ainsi, la charge électrique 104 est connectée de la source de tension continue 102, de sorte que sa tension V est sensiblement égale à la tension U et qu'un courant circule dans les lignes d'alimentation 114, 116.

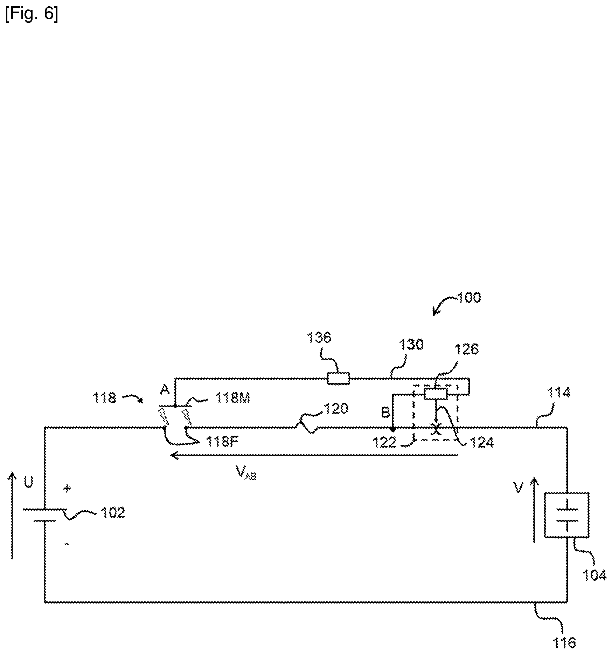

Au cours d'une étape 502, le contacteur de puissance 118 est ouvert et des arcs électriques série apparaissent entre le contact mobile 118M et chacun des contacts fixes 118F, comme cela est illustré sur la figure 6.

Ainsi, l'arc électrique série du côté du point B présente une chute de tension entraînant une circulation de courant dans la branche 130, en particulier dans la résistance d'initialisation 126 qui s'échauffe.

Lorsque le dispositif de soufflage fonctionne correctement, au cours d'une étape 504, les arcs électriques sont soufflés, avant que la résistance d'initialisation 126 atteigne une température de déclenchement de l'interrupteur pyrotechnique 122. La résistance de temporisation 136 peut ainsi être importante pour s'assurer que, pendant le temps de soufflage, la résistance d'initialisation 126 n'ait pas le temps d'atteindre la température de déclenchement.

En revanche, si les arcs électriques se maintiennent, du moins celui du côté du point B, par exemple à cause d'une défaillance du dispositif de soufflage, au cours d'une étape 506, la chaleur dégagée par la résistance d'initialisation 126 devient suffisamment élevée pour déclencher l'interrupteur pyrotechnique 122 qui coupe la première ligne d'alimentation 114 et stoppe ainsi les arcs électriques série.

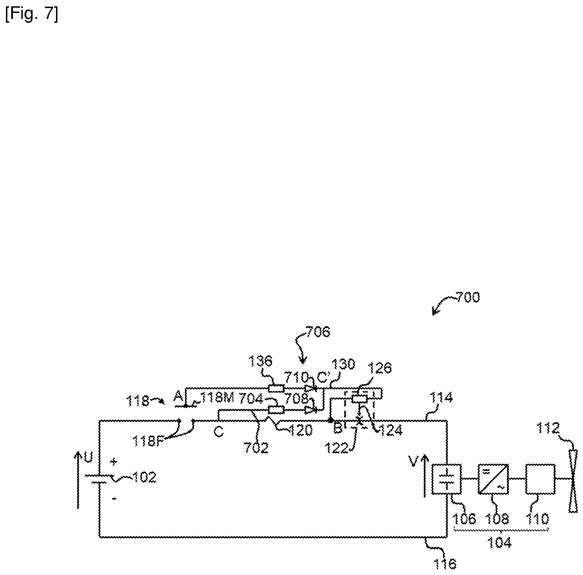

En référence à la figure 7, un autre exemple d'une installation électrique 700 selon l'invention va à présent être décrite.

L'installation électrique 700 est identique à l'installation électrique 100 des figures précédentes, si ce n'est qu'elle comporte, en plus de la branche 130 appelée première branche par la suite, une deuxième branche 702 connectée entre la première ligne d'alimentation 114 et la première branche 130. Plus précisément, la deuxième branche 702 est connectée à un point C de la première ligne d'alimentation 114, situé entre le contacteur de puissance 118 et le point B. La deuxième branche 702 est en outre connectée à un point C' de la première branche 130, situé entre le contact mobile 118M et au moins une partie du dispositif d'ouverture située sur la première branche, la résistance d'initialisation 126 dans l'exemple de la figure 1.

L'installation électrique 700 comporte alors une deuxième résistance de retardement 704 sur la branche auxiliaire 702.

Ainsi, un arc électrique série apparaissant sur le contacteur de puissance 118 provoque un courant circulant dans la première branche 130 au travers de la résistance de temporisation 136, jusqu'à la résistance d'initialisation 126. Au contraire, un arc électrique apparaissant sur le fusible 120 provoque un courant circulant dans la deuxième branche 702 au travers de la résistance de retardement 704, jusqu'à la résistance d'initialisation 126. Or, la tension de l'arc électrique série peut atteindre des valeurs très différentes : généralement 50 V pour le fusible 120 et plusieurs centaines de volts (par exemple 1 000 V) pour le contacteur de puissance 118. Ainsi, il est préférable que les résistances 136, 704 présentent des valeurs différentes, en particulier que la résistance 136 soit plus élevée que la résistance 704, par exemple au moins dix fois plus élevée.

Dans le cas d'un arc électrique sur le contacteur de puissance 118, le courant généré pourrait reboucler par la deuxième branche 702 au lieu de la résistance d'initialisation 126. Pour éviter cela, l'installation électrique 700 comporte de préférence un dispositif anti-retour de courant 706 conçu pour empêcher un passage de courant dans la deuxième branche 702, lorsqu'un arc électrique série apparait entre le contact mobile 118M et le point C. Le dispositif anti-retour de courant 706 peut en outre ou bien à la place être conçu pour empêcher un passage de courant vers le contact mobile 118M depuis le point C', lorsqu'un arc électrique série apparait entre le point C et le point B. Ce dispositif anti-retour de courant 706 comporte par exemple une diode 708 sur la deuxième branche 702, passante vers le point C', ainsi que de préférence une diode 710 sur la première branche 130, entre le contact mobile 118M et le point C', passante vers ce dernier.

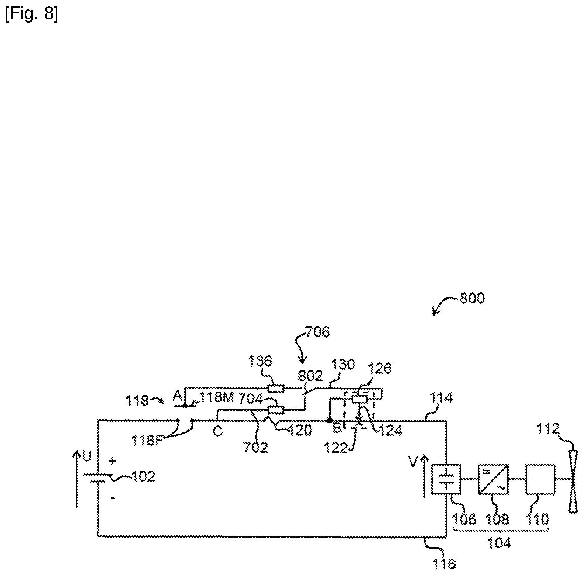

En référence à la figure 8, un autre exemple d'une installation électrique 800 selon l'invention va à présent être décrite.

L'installation électrique 800 est identique à celle de la figure 7, si ce n'est que le dispositif anti-retour de courant 706 comporte un contact auxiliaire 802 couplé par exemple mécaniquement au contact mobile 118M du contacteur de puissance 118, pour connecter la résistance d'initialisation 126 à la première résistance de temporisation 136 lorsque le contacteur de puissance 118 est ouvert et à la deuxième résistance de temporisation 704 lorsque le contacteur de puissance 118 est fermé. De préférence, le contact auxiliaire 802 est conçu pour connecter la résistance d'initialisation 126 à la première résistance de temporisation 136 après que le contacteur de puissance 118 est ouvert et à la deuxième résistance de temporisation 704 avant que le contacteur de puissance 118 soit fermé.

La clarification de l'arc série pourrait être réalisée, par exemple à la place ou bien en complément du déclenchement du fusible pyrotechnique 122, en ouvrant le contacteur de puissance 118.

## Revendications

1. Installation électrique (100 ; 700 ; 800) d'un aéronef, comportant :
- une source électrique (102) ;
- une charge électrique (104) ;
- des première et deuxième lignes d'alimentation (114, 116) connectant la charge électrique (104) à la source électrique (102) pour alimenter électriquement la charge électrique (104) ;
**caractérisée en ce que** l'installation électrique comporte en outre :
- un contacteur de puissance (118) double coupure situé sur la première ligne d'alimentation (114), le contacteur de puissance (118) comportant deux contacts fixes (118F) et un contact mobile (118M) ;
- une branche (130) en parallèle de la première ligne d'alimentation (114), connectée entre le contact mobile (118M) et un point (B) de la première ligne d'alimentation (114) ; et
- un dispositif d'ouverture, en fonction d'un courant circulant dans la branche (130), de l'une des lignes d'alimentation (114, 116).

2. Installation électrique (100 ; 700 ; 800) selon la revendication 1, dans laquelle le dispositif d'ouverture comporte un interrupteur pyrotechnique (122) situé sur l'une des lignes d'alimentation (114), l'interrupteur pyrotechnique (122) comportant une résistance d'initialisation (126) située sur la branche (130).

3. Installation électrique (100 ; 700 ; 800) selon la revendication 2, dans laquelle l'interrupteur pyrotechnique (122) est conçu pour couper la première ligne d'alimentation (114) en dehors du segment de la première ligne d'alimentation (114) s'étendant entre le contacteur de puissance (118) et le point (B).

4. Installation électrique selon l'une quelconque des revendications 1 à 3, dans laquelle le dispositif d'ouverture comporte un contacteur de puissance (118) situé sur la première ligne électrique (114) ou bien sur la deuxième ligne électrique (116).

5. Installation électrique (100 ; 700 ; 800) selon l'une quelconque des revendications 1 à 4, comportant en outre une résistance de temporisation (136) située sur la branche (130).

6. Installation électrique (700 ; 800) selon l'une quelconque des revendications 1 à 5, comportant en outre :
- une deuxième branche (702) connectée entre :
• un deuxième point (C) de la première ligne d'alimentation (114), situé entre le contacteur de puissance (118) et le premier point (B) de la première ligne d'alimentation (114), et
• un point (C') de la première branche (130), situé entre le contact mobile (118M) et au moins une partie (126) du dispositif d'ouverture située sur la première branche (130) ; et
- une résistance de temporisation (136, 704) sur au moins l'une de la deuxième branche (702) et du segment de la première branche (130) s'étendant du contact mobile (118M) au point (C') de la première branche (130).

7. Installation électrique (700 ; 800) selon la revendication 6, comportant en outre un fusible (120) sur la première ligne d'alimentation (114), situé entre les premier et deuxième points (B, C) de la première ligne d'alimentation (114).

8. Installation électrique (700 ; 800) selon la revendication 6 ou 7, comportant une résistance de temporisation (136, 704) sur au moins l'une de la deuxième branche (702) et du segment de la première branche (130) s'étendant du contact mobile (118M) au point (C') de la première branche (130), ces deux résistances de temporisation (136, 704) ayant des valeurs différentes.

9. Installation électrique (700 ; 800) selon l'une quelconque des revendications 6 à 8, comportant en outre un dispositif anti-retour de courant (706) conçu pour empêcher un passage de courant dans la deuxième branche (702), lorsqu'un arc électrique série apparait entre le contact mobile (118M) et le deuxième point (C) de la première ligne d'alimentation (114).

10. Installation électrique (100 ; 700 ; 800) selon l'une quelconque des revendications 1 à 9, dans laquelle la charge électrique (104) comporte une machine électrique (110) d'entraînement d'une soufflante (112) de l'aéronef.

11. Installation électrique (100 ; 700 ; 800) selon l'une quelconque des revendications 1 à 10, dans laquelle le dispositif d'ouverture est conçu pour ouvrir l'une des lignes d'alimentation (114, 116) en réponse à une apparition d'un courant circulant dans la branche parallèle (130) résultant d'une apparition d'un arc électrique série entre le contacteur de puissance (118) et le point (B) de la première ligne d'alimentation (114).

12. Aéronef comportant une installation électrique (100) selon l'une quelconque des revendications 1 à 11.

## Patentansprüche

1. Elektrische Anlage (100; 700; 800) eines Luftfahrzeugs, umfassend:
- eine Stromquelle (102);
- eine elektrische Last (104);
- eine erste und eine zweite Versorgungsleitung (114, 116), die die elektrische Last (104) mit der Stromquelle (102) verbinden, um die elektrische Last (104) mit Strom zu versorgen;
**dadurch gekennzeichnet, dass** die elektrische Anlage weiter Folgendes umfasst:
- einen Doppelunterbrechungs-Leistungsschütz (118), der sich an der ersten Versorgungsleitung (114) befindet, wobei der Leistungsschütz (118) zwei feste Kontakte (118F) und einen beweglichen Kontakt (118M) umfasst;
- einen Zweig (130) parallel zu der ersten Versorgungsleitung (114), der zwischen dem beweglichen Kontakt (118M) und einem Punkt (B) der ersten Versorgungsleitung (114) verbunden ist; und
- eine Öffnungsvorrichtung, in Funktion eines in dem Zweig (130) fließenden Stroms, von einer der Versorgungsleitungen (114, 116).

2. Elektrische Anlage (100; 700; 800) nach Anspruch 1, wobei die Öffnungsvorrichtung einen pyrotechnischen Schalter (122) umfasst, der sich an einer der Versorgungsleitungen (114) befindet, wobei der pyrotechnische Schalter (122) einen Initialisierungswiderstand (126) umfasst, der sich an dem Zweig (130) befindet.

3. Elektrische Anlage (100; 700; 800) nach Anspruch 2, wobei der pyrotechnische Schalter (122) konzipiert ist, um die erste Versorgungsleitung (114) außerhalb des Segments der ersten Versorgungsleitung (114) zu unterbrechen, das sich zwischen dem Leistungsschütz (118) und dem Punkt (B) erstreckt.

4. Elektrische Anlage nach einem der Ansprüche 1 bis 3, wobei die Öffnungsvorrichtung einen Leistungsschütz (118) umfasst, der sich an der ersten elektrischen Leitung (114) oder aber an der zweiten elektrischen Leitung (116) befindet.

5. Elektrische Anlage (100; 700; 800) nach einem der Ansprüche 1 bis 4, die weiter einen Verzögerungswiderstand (136) umfasst, der sich an dem Zweig (130) befindet.

6. Elektrische Anlage (700; 800) nach einem der Ansprüche 1 bis 5, weiter umfassend:
- einen zweiten Zweig (702), verbunden zwischen:
- einem zweiten Punkt (C) der ersten Versorgungsleitung (114), der sich zwischen dem Leistungsschütz (118) und dem ersten Punkt (B) der ersten Versorgungsleitung (114) befindet, und
- einem Punkt (C') des ersten Zweigs (130), der sich zwischen dem beweglichen Kontakt (118M) und mindestens einem Teil (126) der Öffnungsvorrichtung, der sich am ersten Zweig (130) befindet; und
- einem Verzögerungswiderstand (136, 704) an mindestens einem des zweiten Zweigs (702) und des Segments des ersten Zweigs (130), das sich vom beweglichen Kontakt (118M) zu Punkt (C') des ersten Zweigs (130) erstreckt.

7. Elektrische Anlage (700; 800) nach Anspruch 6, weiter umfassend eine Sicherung (120) an der ersten Versorgungsleitung (114), die sich zwischen dem ersten und dem zweiten Punkt (B, C) der ersten Versorgungsleitung (114) befindet.

8. Elektrische Anlage (700; 800) nach Anspruch 6 oder 7, umfassend einen Verzögerungswiderstand (136, 704) an mindestens einem des zweiten Zweigs (702) und des Segments des ersten Zweigs (130), das sich vom beweglichen Kontakt (118M) zu Punkt (C') des ersten Zweigs (130) erstreckt, wobei diese zwei Verzögerungswiderstände (136, 704) unterschiedliche Werte aufweisen.

9. Elektrische Anlage (700; 800) nach einem der Ansprüche 6 bis 8, weiter umfassend eine Rückstromschutzvorrichtung (706), die konzipiert ist, um einen Stromdurchgang in dem zweiten Zweig (702) zu verhindern, wenn ein Serienlichtbogen zwischen dem beweglichen Kontakt (118M) und dem zweiten Punkt (C) der ersten Versorgungsleitung (114) auftritt.

10. Elektrische Anlage (100; 700; 800) nach einem der Ansprüche 1 bis 9, wobei die elektrische Last (104) eine elektrische Maschine (110) zum Antrieb eines Gebläses (112) des Luftfahrzeugs umfasst.

11. Elektrische Anlage (100; 700; 800) nach einem der Ansprüche 1 bis 10, wobei die Öffnungsvorrichtung konzipiert ist, um eine der Versorgungsleitungen (114, 116) als Reaktion auf ein Auftreten eines Stroms zu öffnen, der in dem parallelen Zweig (130) fließt, was in einem Auftreten eines Serienlichtbogens zwischen dem Leistungsschütz (118) und dem Punkt (B) der ersten Versorgungsleitung (114) resultiert.

12. Luftfahrzeug, umfassend eine elektrische Anlage (100) nach einem der Ansprüche 1 bis 11.

## Claims

1. An electrical installation (100; 700; 800) for an aircraft, comprising:
- a power source (102);
- an electrical load (104);
- first and second power supply lines (114, 116) connecting the electrical load (104) to the power source (102) to supply electrical power to the electrical load (104); and **characterized in that** the electrical installation further comprises:
- a double-break power contactor (118) located on the first power supply line (114), the power contactor (118) comprising two fixed contacts (118F) and one movable contact (118M);
- a branch (130) in parallel with the first power supply line (114), connected between the movable contact (118M) and a point (B) of the first power supply line (114); and
- a device for opening one of the power supply lines (114, 116) on the basis of a current flowing in the branch (130).

2. The electrical installation (100; 700; 800) according to claim 1, wherein the opening device comprises a pyroswitch (122) located on one of the power supply lines (114), the pyroswitch (122) comprising an initialization resistor (126) located on the branch (130).

3. The electrical installation (100; 700; 800) according to claim 2, wherein the pyroswitch (122) is designed to cut the first power supply line (114) outside the segment of the first power supply line (114) extending between the power contactor (118) and the point (B).

4. The electrical installation according to any one of claims 1 to 3, wherein the opening device comprises a power contactor (118) located on the first electrical line (114) or on the second electrical line (116).

5. The electrical installation (100; 700; 800) according to any one of claims 1 to 4, further comprising a timing resistor (136) located on the branch (130).

6. The electrical installation (700; 800) according to any one of claims 1 to 5, further comprising:
- a second branch (702) connected between:
• a second point (C) on the first power supply line (114), located between the power contactor (118) and the first point (B) on the first power supply line (114), and
• a point (C') on the first branch (130), located between the movable contact (118M) and at least one part (126) of the opening device located on the first branch (130); and
- a timing resistor (136, 704) on at least one of the second branch (702) and the segment of the first branch (130) extending from the movable contact (118M) to the point (C') of the first branch (130).

7. The electrical installation (700; 800) according to claim 6, further comprising a fuse (120) on the first power supply line (114), located between the first and second points (B, C) of the first power supply line (114).

8. The electrical installation (700; 800) according to claim 6 or 7, comprising a timing resistor (136, 704) on at least one of the second branch (702) and the segment of the first branch (130) extending from the movable contact (118M) to the point (C') of the first branch (130), these two timing resistors (136, 704) having different values.

9. The electrical installation (700; 800) according to any one of claims 6 to 8, further comprising a current backflow prevention device (706) designed to prevent current flow in the second branch (702) when a series electric arc occurs between the movable contact (118M) and the second point (C) of the first power supply line (114).

10. The electrical installation (100; 700; 800) according to any one of claims 1 to 9, wherein the electrical load (104) comprises an electrical machine (110) for driving a fan (112) of the aircraft.

11. The electrical installation (100; 700; 800) according to any one of claims 1 to 10, wherein the opening device is designed for opening one of the power supply lines (114, 116) in response to an occurrence of a current flowing in the parallel branch (130) resulting from an occurrence of a series electric arc between the power contactor (118) and the point (B) of the first power supply line (114).

12. An aircraft comprising an electrical installation (100) according to any one of claims 1 to 10.
